# EUROPÄISCHE PATENTSCHRIFT

(11) **EP 2 146 192 B1**
(45) Veröffentlichungstag und Bekanntmachung des Hinweises auf die Patenterteilung: **24.06.2015**
(21) Anmeldenummer: 09008891.5
(22) Anmeldetag: 08.07.2009
(51) Int. Cl.: G01G 21/30, G01G 23/00, F16J 15/447

(54) **Labyrinthdichtung**
Labyrinth seal
Joint à labyrinthe

(30) Priorität: 14.07.2008 DE 202008009407 U
(43) Veröffentlichungstag der Anmeldung: 20.01.2010
(73) Patentinhaber: WIPOTEC Wiege-und Positioniersysteme GmbH, 67657 Kaiserslautern (DE)
(72) Erfinder: Schulz, Stefan, 67661 Kaiserslautern (DE)
(74) Vertreter: Mischung, Ralf

(56) Entgegenhaltungen:
- EP-A1- 0 943 849
- GB-A- 190 613 004
- US-A- 3 848 688
- US-A- 3 940 153
- US-A- 4 335 886
- US-A1- 2005 217 902

## Beschreibung

Die Erfindung betrifft eine Labyrinthdichtung zur vorzugsweise berührungslosen Abdichtung zweier relativ zueinander beweglicher Elemente. Insbesondere ist die Dichtung vorgesehen für eine Waage.

Labyrinthdichtungen, auch für Waagen, sind aus dem Stand der Technik in unterschiedlichen Ausführungen bekannt. Zweck ist stets die Vermeidung des Eindringens von Staub oder fließfähigen Medien in das von der Dichtung umschlossene Innere. Bei Labyrinthdichtungen für Waagen, insbesondere für solche, die nach dem Prinzip der elektromechanischen Kraftkompensation arbeiten, ist dabei vorgesehen, dass ein mit dem beweglichen Lastaufnehmer gekoppeltes äußeres Dichtungselement einem mit einem Wägezellengehäuse verbundenen inneren Dichtungselement gegenüberliegt und dabei einen möglichst engen Kanal ausbildet. Zur Vermeidung unerwünschter Kraftschlüsse müssen Labyrinthdichtungen meist auf eine räumliche Abtrennung zwischen dem zu schützenden inneren Bereich und der Umgebung (etwa durch eine Membran) verzichten. Stattdessen wird versucht, durch die gezielt geformten und einen möglichst verwinkelten Kanal ausbildenden, einander gegenüberliegenden Dichtungselemente das Eindringen von Schmutz oder Flüssigkeiten zu verhindern.

Zum Einsatz kommen die Dichtungen bspw. für Kabeldurchführungen, aber auch im Bereich der Lasteinleitungsstelle einer Waage, um das Waageninnere dort gegen die Umgebung abzudichten. Neben der eigentlichen Dichtfunktion gegen staub, Flüssigkeiten etc. kann die Dichtung auch zur Abschirmung gegen hochfrequente Strahlung Verwendung finden.

Aus der US 2005/0217902 ist eine Labyrinthdichtung bekannt.

Aus der US 3,848,688 ist eine solche Labyrinthdichtung bekannt, bei der eine äußere mit einem Lastaufnehmer gekoppelte Haube mehrere konzentrisch zueinander angeordnete innere Dichtungselemente überragt. Die inneren Dichtungselemente sind dabei mit Ablaufschrägen ausgebildet, die ein eindringendes Medium gezielt in die Umgebung zurückführen sollen.

Die US 1,558,146 lehrt eine nach Art eines Labyrinths ausgebildete Öldichtung. Auch dort umläuft eine zylinderförmige Schale eine konzentrisch dazu im Inneren angeordnete Wulst, um durch Ausbildung eines möglichst engen Zwischenspalts das Eindringen von Medium zu vermeiden.

Diese und andere bekannte Labyrinthdichtungen sind nachteiligerweise nicht in der Lage, ein forciert eindringendes Medium sicher abzuhalten beziehungsweise abzuführen. Insbesondere fließfähige Medien (wie zum Beispiel Wasser eines zur Reinigung aufgebrachten Wasserstrahls) dringen ohne nennenswerten Widerstand in die bekannten Dichtungen ein und "überfluten" den zwischen den einzelnen Labyrinthelementen ausgebildeten Kanal, so dass das Medium bis in den zu schützenden Bereich der Waage eindringen kann.

Aufgabe der Erfindung ist es daher, eine verbesserte Labyrinthdichtung anzubieten, die insbesondere vor fließfähigen Medien einen guten Schutz bietet.

Die Aufgabe wird gelöst durch eine Labyrinthdichtung nach Anspruch 1.

Der Kern der Erfindung liegt in der Erkenntnis, dass ein in eine Labyrinthdichtung eindringendes fließfähiges Medium durch geeignete geometrische Mittel dort derart zwangsgeführt werden kann, dass die daraus entstehende Strömungsbewegung einem tieferen Eindringen in die Dichtung entgegenwirkt. In diesem Sinne sorgt die erfindungsgemäße Dichtung dafür, dass das eindringende Medium in geeigneter Weise so zwangsgeführt wird, dass es einen Wirbel ausbildet und im Wesentlichen quer zur Einströmrichtung abgeführt wird, ohne in die Dichtung weiter einzudringen.

Dadurch ergibt sich der Vorteil, dass eine beispielsweise mit einem Wasserstrahl beaufschlagte erfindungsgemäße Labyrinthdichtung gegen das schädliche Eindringen des Wassers ausreichend abgedichtet ist, da das Wasser gezielt umgelenkt und einem vorgegebenen Strömungsverhalten unterworfen wird, welches die Abfuhr des eingedrungenen Wassers erleichtert und die weitere Zufuhr vorzugsweise sogar behindert.

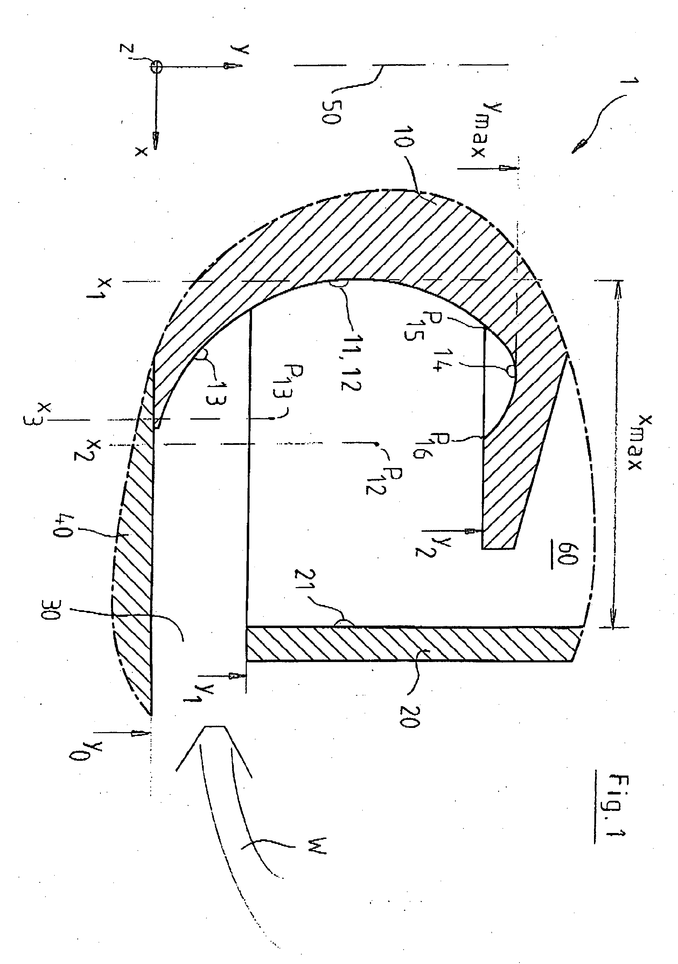

Eine einfachste Ausführungsform der Labyrinthdichtung sieht dabei ein erstes inneres Dichtungselement vor, dessen nach außen gewandte Außenoberfläche sich im Querschnitt in einer ersten, vorzugsweise horizontalen X-Richtung mindestens bis zu einer ersten X-Koordinate X₁ erstreckt. Ein zweites, äußeres Dichtungselement ist dem ersten Dichtungselement in X-Richtung beabstandet gegenüberliegend angeordnet. Die beiden Dichtungselemente erstrecken sich dabei in einer zur X-Richtung senkrechten, vorzugsweise vertikalen Y-Richtung aufwärts (siehe Fig. 1.).

Im Querschnitt (mit Blickrichtung senkrecht zu den beiden Richtungen X und Y) erstreckt sich die nach außen gewandte Außenoberfläche des inneren Dichtungselements, beginnend bei einer Ausgangshöhe Y₀, dabei aufwärts bis zu einer ersten Y-Höhe Y₁ und weiter bis mindestens zu einer darüber liegenden zweiten Y-Höhe Y₂. Wie noch zu sehen sein wird, muss dieser Verlauf nicht streng vertikal oder einer Geraden folgend ausgebildet sein.

Die nach innen gewandte Innenoberfläche des äußeren Dichtungselements erstreckt sich im Querschnitt, beginnend erst bei der ersten Y-Höhe Y₁, so bis mindestens zur zweiten Y-Höhe Y₂ aufwärts, dass die Außen- und Innenoberfläche zwischen der ersten und zweiten Y-Höhe Y₁, Y₂ einander gegenüber liegen. Mit anderen Worten: Im Bereich zwischen diesen beiden Y-Höhen Y₁ und Y₂ sind Innenoberfläche und Außenoberfläche einander zugewandt. sie müssen dabei nicht zwingend parallel zueinander verlaufen. In diesem Bereich begrenzen sie den dazwischenliegenden Raum in X-Richtung.

Während das innere Dichtungselement eine Außenoberfläche aufweist, die bereits an der Ausgangshöhe Y₀ ansetzt, beginnt das äußere Dichtungselement beziehungsweise dessen nach innen gewandte Innenoberfläche erst ab der ersten Y-Höhe Y₁. Darunter, zwischen der Ausgangshöhe Y₀ und der ersten Y-Höhe Y₁, ist eine Dichtungsöffnung ausgebildet, welche die Relativbewegung der beiden Dichtungselemente zueinander gestattet, gleichzeitig jedoch auch das (unerwünschte) Eindringen von Medium ermöglicht.

Der Kern der Erfindung liegt nun darin, dass die Außenoberfläche des inneren Dichtungselements zwischen der Ausgangshöhe Y₀ und der zweiten Y-Höhe Y₂ im Querschnitt wenigstens einen gekrümmten Flächenabschnitt aufweist. Durch diesen gekrümmten Flächenabschnitt wird das durch die Dichtungsöffnung einströmende Medium auf eine gekrümmte Strömungsbahn gelenkt, wodurch insbesondere Strömungswirbel ausbildbar sind, die ein weiteres Vordringen des Mediums in die Dichtung erschweren beziehungsweise verhindern und dagegen ein Abführen des einströmenden Mediums in die zur X- und Y-Richtung senkrecht liegende Blickrichtung Z bewirken. Der gekrümmte Abschnitt kann sich dabei über die gesamte Höhendifferenz Y₀ - Y₂ erstrecken, oder auch nur über einen Teil davon. Auch mehrere verbundene oder voneinander beabstandete Krümmungsabschnitte sind denkbar.

Der Krümmungsmittelpunkt dieses wenigstens einen gekrümmten Flächenabschnitts ist vorzugsweise außerhalb des inneren Dichtungselements angeordnet, so dass die X-Koordinate des Krümmungsmittelpunkts größer ist als die minimale Erstreckung X₁ der Außenoberfläche in X-Richtung.

Eine Krümmung kann auch durch mehrere einzelne Krümmungen zusammengesetzt sein und daher durch eine im Wesentlichen beliebige Kurvenform ausgebildet werden, wobei für jede Krümmung ein eigener Krümmungsmittelpunkt zugeordnet werden kann. Alle Krümmungsmittelpunkte liegen dabei vorzugsweise auf einer Evolute.

Der erfindungsgemäße gekrümmte Flächenabschnitt liegt - wie vorbeschrieben - oberhalb der Ausgangshöhe Y₀ und unterhalb der zweiten Y-Höhe Y₂. Dadurch wird sichergestellt, dass der die Strömung günstig beeinflussende gekrümmte Oberflächenabschnitt zumindest dort angeordnet ist, wo ihm die nach innen gewandte Innenfläche des äußeren Dichtungselements oder die Dichtungsöffnung frei gegenüberliegt. Die Y-Höhe Y₂ soll dabei ein Wert sein, oberhalb dessen
a) die Außenoberfläche des inneren Dichtungselements einen Verlauf zeigt, der der Innenfläche des äußeren Dichtungselements nicht mehr im klassischen Sinne gegenüberliegt, beispielsweise weil sich die Oberfläche dort überwiegend in X- anstatt in Y-Richtung erstreckt, oder
b) die Oberfläche des inneren Dichtungselements Schwankungen in Y-Richtung aufweist und sich beispielsweise von einem Wert maximaler Erstreckung in Y-Richtung wieder um ein Maß herunter erstreckt. In diesem Fall würde der sich herunter erstreckende Abschnitt die "freie Sicht", also das behinderungsfreie Gegenüberliegen der beiden Wandflächen der Dichtungselemente behindern, so dass hier von "gegenüberliegend" nicht gesprochen werden könnte.

Zur besonders guten Ausbildung einer gezielten Strömung ist nach einer vorteilhaften Ausführungsform der Erfindung vorgesehen, dass die Außenoberfläche auch zwischen der Ausgangshöhe Y₀ und der ersten Y-Höhe Y₁ einen gekrümmten Flächenabschnitt aufweist, wobei dessen wenigstens einer Krümmungsmittelpunkt wiederum eine X-Position einnimmt, die größer ist als diejenige der minimalen X-Erstreckung X₁ des inneren Dichtungselements. Damit wird klargestellt, dass auch unterhalb der Position Y₁, also dort, wo dem inneren Dichtungselement die Dichtungsöffnung gegenüberliegt, bereits ein gekrümmter Flächenabschnitt vorgesehen ist. Dadurch wird die durch die Dichtungsöffnung einströmende Flüssigkeit bereits durch die in dieser Höhe angeordnete gekrümmte Fläche auf eine günstige Strömungsbahn gezwungen. Insbesondere ist also nicht vorgesehen, dass dort (unterhalb von Y₁) beispielsweise ausschließlich ein sich senkrecht nach oben erstreckender Oberflächenabschnitt vorgesehen ist, der ein unkontrolliertes Anströmen beziehungsweise Abströmen von dieser Fläche bewirken würde. Stattdessen sorgt die gekrümmte Fläche im unteren Bereich des inneren Dichtungselements für ein sanftes Umlenken der zunächst hauptsächlich in X-Richtung einströmenden Flüssigkeit in Y-Richtung.

Schließlich sieht eine weitere vorteilhafte Ausführungsform der Erfindung vor, dass auch oberhalb der zweiten Y-Höhe Y₂ ein gekrümmter Flächenabschnitt auf der Außenoberfläche des inneren Dichtungselements vorgesehen ist, wobei dieser Flächenabschnitt im Querschnitt eine zwischen zwei tiefer liegenden Oberflächenpunkten ausgeformte maximale Y-Höhe Yₘₐₓ durchläuft. Diese besondere Formgebung bewirkt vorteilhaft, dass eine in (positive) Y-Richtung an der inneren Oberfläche empor steigende Flüssigkeit bis zur Höhe Yₘₐₓ hinaufgeführt und von dort wieder in (negative) Y-Richtung, also nach unten, abgelenkt wird. Dadurch ergibt sich der besondere Vorteil, dass die durch die Dichtungsöffnung eintretende Flüssigkeit gezielt davon abgehalten wird, entlang des zwischen den Dichtungselementen ausgebildeten Kanals allzu weit nach oben zu steigen. Stattdessen erzeugt der gekrümmte Oberflächenverlauf oberhalb von Y₂ eine Umkehr der Strömungsrichtung beziehungsweise die Ausbildung eines Wirbels, der in idealisierter Annahme um eine zur X- und Y-Richtung senkrechte Achse Z rotiert. In Versuchen wurde überraschend festgestellt, dass eine solche Flüssigkeitswalze danach strebt, sich in Achsrichtung Z auszubreiten beziehungsweise abzuströmen. Für den praktischen Anwendungsfall der vorliegenden Erfindung bedeutet dies, dass die Flüssigkeit (im Querschnitt betrachtet) in Form eines Wirbels in der X- Y-Ebene rotiert und dabei in der dazu senkrecht stehenden Z-Richtung abläuft.

Für den Anwendungsfall einer solchen Dichtung in einer Waage könnte sich folgender Umstand ergeben: Das Gerät soll zur Reinigung mit einem strömungsfähigen Medium, insbesondere mit Luft oder Wasser, vorzugsweise unter hohem Druck, beaufschlagt werden. Bei der Reinigung wird bspw. ein Wasserstrahl (beabsichtigt oder unbeabsichtigt) von außen auf den Bereich der Dichtungsöffnung gerichtet. Das zunächst in X-Richtung eindringende Wasser wird durch wenigstens eine erfindungsgemäße gekrümmte Oberfläche in Y-Richtung umgelenkt, vorzugsweise unter Bildung eines Wirbels. Das senkrecht zum Wirbelquerschnitt strebende Wasser gelangt dabei in benachbarte Dichtungsbereiche, auf die der Wasserstrahl nicht gerichtet ist, so dass das Wasser dort im Bereich der Dichtungsöffnung wieder nach außen abfließen kann.

Eine besonders vorteilhafte Ausführungsform der Erfindung sieht vor, dass das einströmende Medium nach Durchlaufen der maximalen Y-Höhe Yₘₐₓ gezielt bis zu einer speziell ausgeformte Abrisskante an der Oberfläche des inneren Dichtungselements gelenkt wird, um ein Ablösen der Strömung beziehungsweise des Wirbels genau an dieser Stelle hervorzurufen. Dies bedeutet, dass die in den Bereich zwischen den beiden Dichtungselementen eintretende Flüssigkeit zunächst an der gekrümmten inneren Dichtfläche nach oben steigt bis zur Höhe Yₘₐₓ, von dort der gekrümmten Fläche weiter folgt und wieder abwärts gerichtet bis zur erfindungsgemäßen Abrisskante gelangt, wo sich die Strömung besonders leicht von der Oberfläche lösen kann, um Wirbelbildung zu begünstigen.

Wie aus den bisherigen Ausführungen bereits ersichtlich ist, bietet sich in einer vorteilhaften Variante der Erfindung an, die gekrümmten Oberflächen in den einzelnen Y-Bereichen (zwischen Y₀ und Y₁, zwischen Y₁ und Y₂ und oberhalb von Y₂) zu einer gemeinsamen gekrümmten Oberfläche auszubilden beziehungsweise zusammenzusetzen. In diesem Fall werden störende Stufen oder strömungstechnisch wirkungslose oder nachteilige lineare oder nicht stetig verlaufende Abschnitte zwischen den einzelnen Y-Zonen vermieden, und die Strömung kann auf einer stetigen Krümmungsbahn an der inneren Oberfläche entlanggeführt werden. In Versuchen hat sich dabei überraschend herausgestellt, dass eine besonders wirksame und damit vorteilhafte Oberflächenform dann gegeben ist, wenn ein (oder aus mehreren Flächenabschnitten zusammengesetzter gemeinsamer) Flächenabschnitt das Querschnittsprofil einer logarithmischen Spirale aufweist. Hierbei werden die vorgeschriebenen Wirbel besonders gut und effektiv ausgebildet, so dass das eindringende Medium besonders vorteilhaft wieder abgeführt werden kann.

Es wurde bereits erwähnt, dass im Bereich zwischen dem Ausgangswert Y₀ und der ersten Y-Höhe Y₁ an der Außenoberfläche des inneren Dichtungselements ein gekrümmter Flächenabschnitt vorgesehen sein kann. Eine vorteilhafte Variante sieht dabei vor, dass eine an diesen gekrümmten Flächenabschnitt angelegte Tangente parallel zur X-Richtung verläuft. Damit ist sichergestellt, dass ein in (negativer) X-Richtung eintretender Flüssigkeitsstrahl sanft ergriffen und allmählich in positive Y-Richtung nach oben abgelenkt wird. Besonders effektiv ist die Ausbildung dieser Formgebung dann, wenn die Tangente auf der Ausgangshöhe Y₀ verläuft, wenn die gekrümmte Fläche also bereits in dieser Fläche ansetzt.

Der Zweck der Labyrinthdichtung wird darüber hinaus besonders gut erreicht, wenn die Dichtungsöffnung schmaler ist als der maximale X-Abstand zwischen der Innenoberfläche und den gegenüberliegenden Außenoberflächen der beiden Dichtungselemente. Mit anderen Worten: Zwischen den Dichtungselementen wird ein Raum ausgebildet, der größer ist als der Eintrittsspalt unterhalb des äußeren Dichtungselements. Dadurch wird erfindungsgemäß sichergestellt, dass der Eintrittsquerschnitt kleiner ist als derjenige senkrecht zur Wirbelströmung, über den das Fluid seitlich wieder abgeführt wird. Die Dichtungsöffnung fungiert hier quasi als Drossel und stellt sicher, dass nicht mehr Flüssigkeit zwischen die beiden Dichtungselemente gelangt, als innerhalb dieser seitlich abgeführt werden kann.

Eine vorteilhafte Anwendung der erfindungsgemäßen Labyrinthdichtung sieht vor, dass sie auf ein Wägezellengehäuse aufgesetzt wird, wobei die Oberseite des Gehäuses zusammenfallen soll mit der Ausgangshöhe Y₀. In diesem Fall (und wie in Fig. 1 zu sehen) wird die Dichtungsöffnung zwischen der in der ersten Y-Höhe Y₁ vorgesehenen Unterkante des äußeren Dichtungselements und dem Wägezellengehäuse gebildet.

Für die in der vorliegenden Beschreibung gewählte räumliche Orientierung der Dichtungselemente bzw. ihre Erstreckung im Raum ist deren relative Positionierung zueinander maßgeblich, nicht aber ihre absolute Lage und Ausrichtung. Somit kann die Dichtung bspw. kopfüber oder um 90° aus der Waagerechten gekippt angeordnet sein, womit sich die Bezugnahme auf die X-, Y-, und Z-Achsen sinngemäß ändert. Die Dichtungselemente können bspw. auch unterhalb eines Waagengehäuses angebracht sein, wobei die Last von unten in die Wägezelle einwirkt. Auch kann eine von der Dichtung abzudichtende Krafteinleitungsstelle seitlich aus einem Waagengehäuse herausragen.

Die vorstehenden Ausführungen waren nicht auf eine spezielle symmetrische Form der gesamten Labyrinthdichtung gerichtet. Vielmehr ist die erfindungsgemäße Labyrinthdichtung zum Beispiel in langgestreckter Form denkbar, wobei sich die beiden Dichtungselemente parallel zueinander und senkrecht zur X- Y-Richtung erstrecken. Alternativ ist es jedoch auch möglich, die erfindungsgemäße Labyrinthdichtung rotationssymmetrisch auszubilden, so dass das innere und das äußere Dichtungselement gemeinsam um eine im Zentrum der Dichtung gedachte Achse herumlaufen. Das äußere und das innere Dichtungselement hätten dabei im weitesten Sinne ringförmige Gestalt, wobei insbesondere die nach außen weisende Außenfläche des inneren Dichtungselements die erfindungsgemäße Formgebung erfahren soll.

Darüber hinaus sei betont, dass die vorbeschriebenen Dichtungselemente auch als Abschnitte von Dichtkomponenten verstanden werden können. Eine erfindungsgemäß gekrümmte Oberfläche kann also auf einer Dichtungskomponente ausgebildet sein, die darüber hinaus weitere Formgebungen erfährt, Befestigungsabschnitte oder weitere Dichtabschnitte umfasst, die nicht Gegenstand der lokalen Betrachtung der vorliegenden Erfindung sind. Unter "Dichtungselement" ist also explizit auch ein einstückig in einer anderen Komponente integrierter Abschnitt zu verstehen und nicht nur eine isoliert lösbare Einheit.

In Fortführung des Erfindungsgedankens ist es darüber hinaus vorteilhaft, den zwischen den beiden Dichtungselementen gebildeten Kanal an geeigneter Stelle durch eine Membran zu verschließen. Obwohl dadurch zwischen beiden Dichtungselementen grundsätzlich ein Kraftschluss erzeugt, wird kann die damit vorteilhaft erzielte Dichtwirkung diesen Nachteil im Einzelfall überwiegen. Zweckmäßigerweise wird eine solche Membran oberhalb beziehungsweise weiter innerhalb des von den beiden Dichtungselementen ausgebildeten Kanals angeordnet, wohingegen die vorbeschriebene Oberflächenkrümmung unmittelbar im Eingangsbereich der Dichtung, also hinter der Dichtungsöffnung, ausgebildet sein sollte.

Umfangreiche Versuche haben weiterhin überraschend ergeben, dass eine gekrümmte Oberfläche auch auf der Innenseite des äußeren Dichtungselements einen positiven Einfluss auf die Strömung des eintretenden Mediums haben kann. Zweckmäßigerweise weist daher nicht nur die nach außen gerichtete Oberfläche des inneren Dichtungselements, sondern auch die ihr gegenüberliegende innere Oberfläche des äußeren Dichtungselements einen gekrümmten Oberflächenabschnitt auf. Dieser kann zur Unterstützung der angesprochenen Wirbelbildung entsprechend ausgeformt sein und insbesondere die Form einer logarithmischen Spirale haben.

Weitere vorteilhafte Ausführungsformen ergeben sich aus den Unteransprüchen.

Nachfolgend wird eine Ausführungsform der Erfindung anhand eines Figurenbeispiels näher erläutert.

Die einzige Figur 1 zeigt dabei in schematischer Schnittdarstellung eine Labyrinthdichtung 1.

Die Labyrinthdichtung 1 ist rotationssymmetrisch um eine in Y-Richtung verlaufende Achse 50 ausgebildet. Ein inneres Dichtungselement 10 wird dabei von einem äußeren Dichtungselement 20 umlaufen, wobei das innere Dichtungselement 10 mit seiner Unterseite auf dem Gehäuse 40 einer Wägezelle aufsitzt.

Eine nach außen (also in positive X-Richtung) gewandte Außenoberfläche 11 erstreckt sich dabei im Querschnitt ausgehend von einem tiefsten vertikalen Wert Y₀ bis in eine darüber liegende erste Y-Höhe Y₁, weiter hinauf bis zu einer wiederum darüber liegenden zweiten Y-Höhe Y₂ und hinauf bis zu einem maximalen Wert Yₘₐₓ. Von dort fällt die Oberfläche 11 wieder leicht ab bis auf einen Querschnittspunkt P 16. Der weitere Verlauf der Oberfläche sei im Weiteren unberücksichtigt.

Zu erkennen ist darüber hinaus, dass die Querschnittskurve der Außenoberfläche 11 einen minimalen X-Wert X₁ durchläuft, bei dem sich die Kurve also in Fig. 1 am weitesten nach links erstreckt. Weiterhin ist zu erkennen, dass die Außenoberfläche 11 im Wesentlichen zusammengesetzt ist aus einzelnen gekrümmten Oberflächenabschnitten 12, 13 und 14 sowie einem kurzen senkrechten Abschnitt unterhalb der gekrümmten Oberfläche 13.

Das dem ersten Dichtungselement 10 gegenüber angeordnete zweite Dichtungselement 20 liegt mit seiner nach innen gewandten Innenoberfläche 21 der Außenoberfläche 11 gegenüber, und zwar zumindest im Bereich zwischen Y₁ und Y₂. Zwischen der Oberseite des Waagengehäuses 40, die sich auf Höhe Y₀ befindet, und der ersten Y-Höhe Y₁ ist eine Dichtungsöffnung 30 ausgebildet, so dass sich das äußere Dichtungselement 20 nicht tiefer als bis Y₁ nach unten erstreckt.

Die beiden gekrümmten Oberflächenabschnitte 12 und 13 sind in Richtung auf das äußere Dichtungselement 20 konkav geformt, das heißt, deren wenigstens einer Krümmungsmittelpunkt P₁₂ oder P₁₃ liegt rechts von X₁ beziehungsweise bei einem Wert X₂ (für P₁₂) bzw. X₃ (für P₁₃) der größer ist als X₁. Je nach Kurvenausbildung kann X₃ auch kleiner sein als X₂.

Ein von rechts in die Dichtungsöffnung 30 eintretender Wasserstrahl W strömt erfindungsgemäß zunächst in (negativer) X-Richtung auf den gekrümmten Oberflächenabschnitt 13 zu. Dort wird er in (positive) Y-Richtung ansteigend umgelenkt und weitergeführt auf den zweiten gekrümmten Oberflächenabschnitt 12. Der dem Wasserstrahl innewohnende Impuls führt das Wasser weiter aufwärts bis in den gekrümmten Oberflächenbereich 14 am höchsten Punkt Yₘₐₓ vorbei und bis an den Punkt P₁₆, wo eine nicht näher bezeichnete Abrisskante ausgebildet ist. Durch diese Strömungsführung wird der Wasserstrahl zu einem Wirbel geformt, der sich im Wesentlichen in der X- Y-Ebene um eine dazu senkrechte Achse dreht. Das zunehmend in diesem Wirbel einströmende weitere Wasser wird dabei erfindungsgemäß entlang der Wirbelachse, also in die Zeichenebene hinein oder daraus hinaus, abgeführt, ohne dass das Wasser in einen höher liegenden Dichtungsbereich 60 eindringt. Zur Limitierung der eintretenden Wassermenge und zur Sicherstellung eines ausreichend großen Abflussquerschnittes ist der Abstand Y₀-Y₁ kleiner gewählt als der maximale Abstand zwischen den beiden gegenüber liegenden Oberflächen 11 und 21.

## Patentansprüche

1. Labyrinthdichtung (1) für eine Waage, umfassend
a) ein erstes, inneres Dichtungselement (10), dessen nach außen gewandte Außenoberfläche (11) sich im Querschnitt in einer ersten, vorzugsweise horizontalen Richtung (X) mindestens bis zu einer ersten X-Koordinate (X₁) erstreckt, und
b) ein dem ersten Dichtungselement (10) in X-Richtung beabstandet angeordnetes zweites, äußeres Dichtungselement (20),
c) wobei sich der Querschnitt der Außenoberfläche (11), beginnend bei einer Ausgahgshöhe (Y₀), in einer zur X-Richtung senkrechten Y-Richtung aufwärts erstreckt bis zu einer ersten Y-Höhe (Y₁) und weiter bis mindestens zu einer darüber liegenden zweiten Y-Höhe (Y₂), und
d) wobei sich eine nach innen gewandte Innenoberfläche (21) des äußeren Dichtungselement (20) im Querschnitt, beginnend bei der ersten Y-Höhe (Y₁), so in Y-Richtung aufwärts erstreckt bis mindestens zur zweiten Y-Höhe (Y₂), dass die Außen- und Innenoberfläche (11, 21) zwischen der ersten und zweiten Y-Höhe (Y₁, Y₂) einander zugewandt sind, und
e) wobei unterhalb der ersten Y-Höhe (Y₁) an das äußere Dichtungselement (20) angrenzend eine Dichtungsöffnung (30) vorgesehen ist,
**dadurch gekennzeichnet**,
f) dass die Außenoberfläche (11) zwischen der Ausgangshöhe (Y₀) und der zweiten Y-Höhe (Y₂) im Querschnitt wenigstens einen gekrümmten Flächenabschnitt (12) aufweist, um durch die Dichtungsöffnung (30) einströmendes Medium auf eine gekrümmte Strömungsbahn zu lenken, wobei wenigstens ein Krümmungsmittelpunkt (P₁₂) des gekrümmten Flächenabschnitts (12) eine zweite X-Koordinate (X₂) einnimmt, für die gilt X₂ > X₁.

2. Labyrinthdichtung nach Anspruch 1, **dadurch gekennzeichnet, dass** die Außenoberfläche (11) im Querschnitt zwischen der Ausgangshöhe (Y₀) und der ersten Y-Höhe (Y₁) einen gekrümmten Flächenabschnitt (13) aufweist, dessen wenigstens einer Krümmungsmittelpunkt (P₁₃) eine dritte X-Koordinate (X₃) einnimmt, für die gilt X₃ > X₁

3. Labyrinthdichtung nach Anspruch 1 oder 2, **dadurch gekennzeichnet, dass** die Außenoberfläche (11) im Querschnitt oberhalb der zweiten Y-Höhe (Y₂) einen gekrümmten Flächenabschnitt (14) aufweist, der zwischen zwei tiefer liegenden Oberflächenpunkten (P₁₅, P₁₆) eine maximale Y-Höhe (Yₘₐₓ) durchläuft.

4. Labyrinthdichtung nach dem vorhergehenden Anspruch, **dadurch gekennzeichnet, dass** am Oberflächenpunkt (P₁₆) eine Abrisskante zum gezielten Abreißen einer Strömung ausgebildet ist.

5. Labyrinthdichtung nach einem der vorigen Ansprüche, **dadurch gekennzeichnet, dass** einzelne gekrümmte Flächenabschnitte (12, 13, 14) einen gemeinsamen gekrümmen Flächenabschnitt bildenden.

6. Labyrinthdichtung nach einem der vorigen Ansprüche, **dadurch gekennzeichnet, dass** einzelne oder zu einem gemeinsamen Flächenabschnitt zusammengesetzte gekrümmte Flächenabschnitte (12, 13, 14) den Teil einer logarithmischen Spirale bilden.

7. Labyrinthdichtung nach einem der vorigen Ansprüche und Anspruch 2, **dadurch gekennzeichnet, dass** eine an den gekrümmten Flächenabschnitt (13) angelegte Tangente parallel zur X-Richtung verläuft.

8. Labyrinthdichtung nach einem der vorigen Ansprüche, **dadurch gekennzeichnet, dass** der maximale X-Abstand (Xₘₐₓ) zwischen der Innenoberfläche (21) und der Außenoberfläche (11) größer ist als der Abstand zwischen der Ausgangshöhe (Y₀) und der ersten Y-Höhe (Y₁).

9. Labyrinthdichtung nach einem der vorigen Ansprüche, **dadurch gekennzeichnet, dass** sich in der Ausgangshöhe (Y₀) ein Wägezellengehäuse (40) in X-Richtung erstreckt, so dass die Dichtungsöffnung (30) zwischen der in der ersten Y-Höhe (Y₁) vorgesehenen Unterkante des äußeren Dichtungselements (20) und dem Wägezellengehäuse (40) gebildet wird.

10. Labyrinthdichtung nach einem der vorigen Ansprüche, **dadurch gekennzeichnet, dass** die Dichtung rotationssymmetrisch um eine in Y-Richtung verlaufende Achse (50) ausgebildet ist.

11. Labyrinthdichtung nach einem der vorigen Ansprüche, **dadurch gekennzeichnet, dass** die Innenoberfläche (21) im Querschnitt einen gekrümmten Flächenabschnitt aufweist.

## Claims

1. A labyrinth seal (1) for scales, comprising
a) a first inner sealing element (10), the outwardly facing outer surface (11) of which in cross-section extends in a first preferably horizontal direction (X) at least as far as a first X-coordinate (X₁), and
b) a second outer sealing element (20) that is arranged at a distance from the first sealing element (10) in the X-direction,
c) wherein the cross-section of the outer surface (11), beginning at a starting height (Y₀), extends upwards in a Y-direction, which is perpendicular to the X-direction, as far as a first Y-height (Y₁) and further as far as at least a second Y-height (Y₂) lying thereabove, and
d) wherein an inwardly facing inner surface (21) of the outer sealing element (20) in cross-section, beginning at the first Y-height (Y₁), extends upwards in the Y-direction as far as at least the second Y-height (Y₂) in such a way that the outer and inner surface (11, 21) face each other between the first and the second Y-height (Y₁, Y₂), and
e) wherein provided below the first Y-height (Y₁), adjacently to the outer sealing element (20), there is a sealing opening (30),
**characterised in that**
f) the outer surface (11) has between the starting height (Y₀) and the second Y-height (Y₂) in cross-section at least one curved surface section (12) in order to direct medium flowing in through the sealing opening (30) onto a curved flow path, wherein at least one central point of curvature (P₁₂) of the curved surface section (12) adopts a second X-coordinate (X₂), for which X₂ > X₁ holds good.

2. A labyrinth seal according to claim 1, **characterised in that** the outer surface (11) has in cross-section between the starting height (Y₀) and the first Y-height (Y₁) a curved surface section (13), the at least one central point of curvature (P₁₃) of which adopts a third X-coordinate (X₃) , for which X₃ > X₁ holds good.

3. A labyrinth seal according to claim 1 or 2, **characterised in that** the outer surface (11) has in cross-section above the second Y-height (Y₂) a curved surface section (14) that runs through a maximum Y-height (Yₘₐₓ) between two lower-lying surface points (P₁₅, P₁₆).

4. A labyrinth seal according to the preceding claim, **characterised in that** a break-off edge for targeted break-off of a flow is formed at the surface point (P₁₆).

5. A labyrinth seal according to one of the previous claims, **characterised in that** individual curved surface sections (12, 13, 14) form a common, curved surface section.

6. A labyrinth seal according to one of the previous claims, **characterised in that** individual curved surface sections (12, 13, 14) or curved surface sections (12, 13, 14) that are assembled to form a common surface section form the portion of a logarithmic spiral.

7. A labyrinth seal according to one of the previous claims and claim 2, **characterised in that** a tangent applied at the curved surface section (13) runs parallel to the X-direction.

8. A labyrinth seal according to one of the previous claims, **characterised in that** the maximum X-distance (Xₘₐₓ) between the inner surface (21) and the outer surface (11) is greater than the distance between the starting height (Y₀) and the first Y-height (Y₁).

9. A labyrinth seal according to one of the previous claims, **characterised in that** a weighing-cell housing (40) extends in the X-direction at the starting height (Y₀) so that the sealing opening (30) is formed between the lower edge of the outer sealing element (20), provided at the first Y-height (Y₁), and the weighing-cell housing (40).

10. A labyrinth seal according to one of the previous claims, **characterised in that** the seal is formed so as to be rotationally symmetrical about an axis (50) running in the Y-direction.

11. A labyrinth seal according to one of the previous claims, **characterised in that** the inner surface (21) has in cross-section a curved surface section.

## Revendications

1. Joint d'étanchéité en labyrinthe (1) pour une balance, comprenant
a) un premier élément d'étanchéité interne (10) dont la surface externe (11) orientée vers l'extérieur s'étend en section transversale, dans une première direction (X), de préférence horizontale, au moins jusqu'à une première coordonnée X (X₁) et
b) un deuxième élément d'étanchéité externe (20) disposé à une certaine distance du premier élément d'étanchéité (10) dans la direction X,
c) la section transversale de la surface externe (11) s'étend vers le haut, à partir d'une hauteur initiale (Y₀) dans une direction Y perpendiculaire à la direction X, jusqu'à une première hauteur Y (Y₁) et plus loin jusqu'à au moins une deuxième hauteur Y (Y₂) se trouvant au-dessus et
d) une surface interne (21) de l'élément d'étanchéité externe (20) en section transversale, orientée vers l'intérieur, s'étendant dans la section, à partir de la première hauteur Y (Y₁) dans la direction Y vers le haut jusqu'à au moins une deuxième hauteur Y (Y₂), de façon à ce que les surfaces externe et interne (11, 21) sont orientées l'une vers l'autre entre la première et la deuxième hauteur Y (Y₁, Y₂) et
e) en dessous de la première hauteur Y (Y₁), à proximité de l'élément d'étanchéité externe (20), est prévue une ouverture d'étanchéité (30),
**caractérisé en ce que**
f) la surface externe (11) entre la hauteur initiale (Y₀) et la deuxième hauteur Y (Y₂) présente, en section transversale, au moins une portion de surface courbée (12) pour orienter le fluide s'écoulant à travers l'ouverture d'étanchéité (30) vers une piste d'écoulement incurvée, au moins un centre de courbure (P₁₂) de la portion de surface courbée (12) présentant une deuxième coordonnée X (X₂), pour laquelle X₂ > X₁.

2. Joint d'étanchéité en labyrinthe selon la revendication 1, **caractérisé en ce que** la surface externe (11) comprend, en section transversale entre la hauteur initiale (Y₀) et la première hauteur Y (Y₁), une portion de surface courbée (13) dont au moins un centre de courbure (P₁₃) présente une troisième coordonnée X (X₃) pour laquelle X₃ > X₁.

3. Joint d'étanchéité en labyrinthe selon la revendication 1 ou 2, **caractérisé en ce que** la surface externe (11) comprend, dans la section transversale au-dessus de la deuxième hauteur Y (Y₂) une portion de surface courbée (14) qui passe, entre deux points de surface (P₁₅, P₁₆) situés plus bas, par une hauteur Y maximale (Yₘₐₓ).

4. Joint d'étanchéité en labyrinthe selon la revendication précédente, **caractérisé en ce que**, au niveau du point de surface (P₁₆) se trouve une arête de décrochage pour le décrochage ciblé d'un écoulement.

5. Joint d'étanchéité en labyrinthe selon l'une des revendications précédentes, **caractérisé en ce que** certaines portions de surface courbées (12, 13, 14) forment une portion de surface courbée commune.

6. Joint d'étanchéité en labyrinthe selon l'une des revendications précédentes, **caractérisé en ce que** certaines portions de surface courbées ou les portions de surfaces courbées (12, 13, 14) assemblées en une portion de surface commune forment une partie d'une spirale logarithmique.

7. Joint d'étanchéité en labyrinthe selon l'une des revendications précédentes et la revendication 2, **caractérisé en ce qu'**une tangente à la portion de surface courbée (13) est parallèle à la direction X.

8. Joint d'étanchéité en labyrinthe selon l'une des revendications précédentes, **caractérisé en ce que** la distance maximale (Xₘₐₓ) entre la surface interne (21) et la surface externe (11) est supérieure à la distance entre la hauteur initiale (Y₀) et la première hauteur Y (Y₁).

9. Joint d'étanchéité en labyrinthe selon l'une des revendications précédentes, **caractérisé en ce que**, dans la hauteur initiale (Y₀), un boîtier de cellule de pesage (40) s'étend dans la direction X, de façon à ce que l'ouverture d'étanchéité (30) soit formé entre l'arête inférieure de l'élément d'étanchéité externe (20), prévue dans la première hauteur Y (Y₁), et le boîtier de cellule de pesage (40).

10. Joint d'étanchéité en labyrinthe selon l'une des revendications précédentes, **caractérisé en ce que** le joint d'étanchéité est conçu de manière symétrique en rotation autour d'un axe (50) s'étendant dans la direction Y.

11. Joint d'étanchéité en labyrinthe selon l'une des revendications précédentes, **caractérisé en ce que** la surface interne (21) présente, dans la section transversale, une portion de surface courbée.
